# EUROPEAN PATENT APPLICATION

(11) **EP 4 800 773 A1**
(43) Date of publication of application: **02.09.2026**
(21) Application number: 25838925.3
(22) Date of filing: 27.10.2025
(51) Int. Cl.: H01M 4/58, H01M 10/0525, C01B 25/45, C01B 32/05

(54) **LITHIUM IRON PHOSPHATE POSITIVE ELECTRODE MATERIAL AND PREPARATION METHOD THEREFOR, AND LITHIUM-ION BATTERY**

(30) Priority: 03.01.2025 CN 202510008478
(71) Applicant: Guangdong Brunp Recycling Technology Co., Ltd., Foshan, Guangdong 528137 (CN)
(72) Inventor: HUANG, Weiyan, Foshan, Guangdong 528137 (CN); WANG, Tao, Foshan, Guangdong 528137 (CN); YU, Haijun, Foshan, Guangdong 528137 (CN); LI, Changdong, Foshan, Guangdong 528137 (CN)
(74) Representative: Maidment, Marc
(86) International application number: PCT/CN2025/130270
(87) International publication number: WO 2026/144459

(57) **Abstract**

Disclosed is a lithium iron phosphate cathode material, a preparation method thereof and a lithium-ion battery, and relates to the technical field of batteries. The lithium iron phosphate cathode material comprises primary particles and secondary particles formed by agglomeration of the primary particles. The lithium iron phosphate cathode material satisfies $\frac{FSSS}{{D}_{BET}} = 5 - 40$ and ρ%=50%-90%, where FSSS refers to a Fisher sub-sieve size of the lithium iron phosphate cathode material, D_{BET} refers to a specific surface area particle size of the lithium iron phosphate cathode material, and ρ% refers to a relative density of the secondary particles. The present disclosure provides a lithium iron phosphate cathode material that simultaneously satisfies $\frac{FSSS}{{D}_{BET}} = 5 - 40$ and ρ%=50%-90%. The lithium iron phosphate cathode material exhibits good dispersibility, low agglomeration degree, and high compacted density, and a cathode sheet prepared therefrom demonstrates uniform areal density and high peel strength, so that a battery prepared from the cathode sheet has high specific capacity and superior cycling stability.

## Description

### CROSS-REFERENCE TO RELATED APPLICATIONS

The present disclosure claims priority of Chinese patent application No. 2025100084787 filed to the China National Intellectual Property Administration on January 03, 2025, entitled "LITHIUM IRON PHOSPHATE CATHODE MATERIAL, PREPARATION METHOD THEREFOR, AND LITHIUM-ION BATTERY", the entire contents of which are incorporated herein by reference.

### TECHNICAL FIELD

The present disclosure relates to the technical field of batteries, and in particular to a lithium iron phosphate cathode material, a preparation method therefor, and a lithium-ion battery.

### BACKGROUND

Lithium iron phosphate is currently one of the most competitive cathode active materials for lithium-ion batteries on the market. Compared with lithium cobalt oxide and ternary cathode materials, it has a longer cycle life and superior safety performance. In addition, since lithium iron phosphate has a theoretical specific capacity of 170 mAh·g⁻¹ and a plateau discharge voltage of 3.4V, it possesses considerable energy density.

However, due to its crystal structure, a lithium iron phosphate cathode material has low ionic diffusion rate and poor conductivity. Therefore, methods such as nanosizing, surface coating, and doping, etc., are usually used to improve the Li⁺ diffusion rate and conductivity of the material. However, these methods have, to some extent, led to or affected the agglomeration behavior of the lithium iron phosphate cathode material. For example, the smaller the particle size of the cathode material, the greater the deviation from the standard spherical shape, the broader the particle size distribution, and the more prone the material is to agglomerate. For another example, when the coating layer is composed of a carbon material, and the carbon material is distributed on the surface of the active material in a shape of an island, it will increase the surface roughness of the cathode material, thereby enhancing the interaction force between particles and facilitating particle agglomeration. For yet another example, the preparation process has an impact on the surface chemical properties of the obtained lithium iron phosphate cathode material, which in turn influences the interactions between particles. The appearance of agglomerates leads to pronounced scratches and visibly apparent particles during coating of the cathode, as well as nonuniform areal density of the cathode sheet, making it difficult to maintain the uniformity of the cathode sheet, and consequently affecting the consistency of the battery.

To this end, the present disclosure is proposed hereby.

### SUMMARY

An objective of the present disclosure is to provide a lithium iron phosphate cathode material, a preparation method therefor, and a lithium-ion battery.

The present disclosure is implemented as follows.

In a first aspect, the present disclosure provides a lithium iron phosphate cathode material comprising primary particles and secondary particles formed by agglomeration of the primary particles, wherein the lithium iron phosphate cathode material satisfies $\frac{FSSS}{{D}_{BET}} = 5 - 40$ and ρ%=50%-90%, where FSSS refers to a Fisher sub-sieve size of the lithium iron phosphate cathode material, in a unit of µm, D_{BET} refers to a specific surface area particle size of the lithium iron phosphate cathode material, in a unit of µm; and ρ%=1-H%, where ρ% refers to a relative density of the secondary particles, and H% refers to a porosity of the secondary particles.

In alternative embodiments, D_{BET} denotes the particle size of the lithium iron phosphate cathode material, as determined and calculated based on measurements from a nitrogen adsorption-desorption method, and ${D}_{BET} = \frac{6}{BET \times {ρ}_{LFP}}$, where BET refers to a specific surface area of the lithium iron phosphate cathode material, and has a value≤20 m²/g, and *ρ_{LFP}* refers to a true density of the lithium iron phosphate cathode material, and has a value in a range of 3.3-3.6 g/cm³.

In alternative embodiments, FSSS denotes an average particle size of the lithium iron phosphate cathode material as measured by a constant-flow air permeability method, and has a value in a range of 0.4-5 µm; and/or,
an agglomeration degree N of the lithium iron phosphate cathode material is less than 25000, and the agglomeration degree satisfies $N = {\left(\frac{FSSS}{{D}_{BET}}\right)}^{3} \times ρ %$; and/or,
a compacted density of the lithium iron phosphate cathode material is 1.9-3.0 g/cm³.
In alternative embodiments, the lithium iron phosphate cathode material satisfies $\frac{FSSS}{{D}_{BET}} = 10 - 30$; and/or,
the secondary particles of the lithium iron phosphate cathode material satisfy ρ%=50%-70%; and/or,
the lithium iron phosphate cathode material has a agglomeration degree N of 200-12000; and/or,
the lithium iron phosphate cathode material satisfies FSSS=1-2.5 µm; and/or,
the lithium iron phosphate cathode material satisfies BET=9-15 m²/g.

In alternative embodiments, the lithium iron phosphate cathode material comprises an active material matrix and a carbon material. The active material matrix has a general formula of Li₁₋ₓAₓFe_{1-y}M_{y}(PO_{4-z})D_{z}, where A is one or more selected from the group consisting of Na and Mg; M is one or more selected from the group consisting of Al, Ni, Co, Mn, Ti, La, Ce, Cr, Mo, Ca, Ga, V, Nb, Zr, In, Zn and Y; D is one or more selected from the group consisting of F, S, N, and Cl; 0≤x≤0.1; 0≤y≤0.1 and 0≤z≤0.1; and a mass of the carbon material is 1% to 5% of a mass of the lithium iron phosphate cathode material.

In a second aspect, the present disclosure provides a preparation method of the lithium iron phosphate cathode material as described in any one of the aforementioned embodiments, comprising:
mixing iron phosphate and a lithium salt to obtain a raw material mixture, mixing the raw material mixture with carbon sources having different vaporization temperatures to obtain a precursor; and
subjecting the precursor to a staged calcination in an inert atmosphere, followed by crushing, sieving, and magnetic separation to obtain the lithium iron phosphate cathode material.

In alternative embodiments, the step of mixing the iron phosphate and the lithium salt comprises at least one of features I to IV;
Feature I: before mixing the iron phosphate and the lithium salt, the iron phosphate is first added to a jet mill for milling;
Feature II: the lithium salt is at least one of lithium carbonate, lithium oxalate, and lithium acetate;
Feature III: when mixing the iron phosphate and the lithium salt, a dopant is further added, which is at least one of a salt, an oxide, and a hydroxide of a doping element; and
Feature IV: the iron phosphate and the dopant are added according to a stoichiometric ratio.

In alternative embodiments, the carbon sources having different vaporization temperatures comprise a first carbon source having a vaporization temperature of 400-600 °C, a second carbon source having a vaporization temperature of 200-400 °C, and a third carbon source having a vaporization temperature of 100-200 °C;
the first carbon source comprises at least one of polyimide, polyphenylene ether, and polyetherimide;
the second carbon source comprises at least one of glucose, polyethylene glycol, starch, sucrose, maltose, cellulose, chitosan, polyacrylonitrile, benzyl alcohol, and glycerol; and
the third carbon source comprises at least one of phenol, ethylene glycol, propylene glycol, butylene glycol, isopropanol, sorbitol, erythritol, fructose, malic acid, citric acid, and salicylic acid.
In alternative embodiments, the step of mixing the raw material mixture with the carbon sources having different vaporization temperatures comprises at least one of features V to IX;
Feature V: the raw material mixture is mixed with the carbon sources having different vaporization temperatures in a jet mill, and an airflow is introduced during mixing, wherein the airflow has a pressure of 0.5-1.5 MPa and a temperature of 25-120 °C; and the mixing is performed for a total mixing time of 15-60 minutes;
Feature VI: the carbon sources having different vaporization temperatures are first prepared into a carbon source solution with a mass percentage concentration of 10% to 30% before being mixed with the raw material mixture, subsequently the carbon source solution is atomized and then mixed with the raw material mixture, wherein an atomization pressure is 0.1-1.5 MPa;
Feature VII: the raw material mixture is first mixed with the first carbon source, then mixed with the second carbon source, and finally mixed with the third carbon source;
Feature VIII: a total mass of the carbon sources having different vaporization temperatures is 15% to 25% of a mass of the raw material mixture; and
Feature IX: when the raw material mixture is mixed with the carbon sources having different vaporization temperatures, a mass ratio of the first carbon source, the second carbon source, and the third carbon source is 0-15:2.5-15:2.5-10.

In alternative embodiments, the staged calcinations comprise a first stage, a second stage, and a third stage, wherein in the first stage, the temperature is raised at a rate of 1 to 2 °C/min to 180-220 °C and maintained at this temperature for 1 to 2 hours; in the second stage, the temperature is raised at a rate of 2 to 3 °C/min to 380-420 °C and maintained at this temperature for 2 to 4 hours; and in the third stage, the temperature is raised at a rate of 4 to 6 °C/min to 650-750 °C and maintained at this temperature for 4 to 8 hours..

In a third aspect, the present disclosure provides a lithium-ion battery comprising the lithium iron phosphate cathode material as described in any one of the aforementioned embodiments or the lithium iron phosphate cathode material obtained by the preparation method of the lithium iron phosphate cathode material as described in any one of the aforementioned embodiments.

The present disclosure has the following beneficial effects.
(1) The present disclosure provides a lithium iron phosphate cathode material that simultaneously satisfies $\frac{FSSS}{{D}_{BET}} = 5 - 40$ and ρ%=50%-90%. The lithium iron phosphate cathode material exhibits good dispersibility, low agglomeration degree, and high compacted density. A cathode sheet prepared from the lithium iron phosphate cathode material as the cathode active material demonstrates uniform areal density and high peel strength, so that a battery prepared from the cathode sheet has high specific capacity and superior cycling stability.
(2) The preparation method of the lithium iron phosphate cathode material provided by the present disclosure utilizes carbon sources having different vaporization temperatures to create pores by vaporization at different calcination stages, resulting in loose bonding between particles and suppression of adhesion and agglomeration between particles, such that the obtained cathode material has low agglomeration degree. Through the preparation method provided by the present disclosure, a lithium iron phosphate cathode material that simultaneously satisfies $\frac{FSSS}{{D}_{BET}} = 5 - 40$ and ρ%=50%-90% can be obtained, the obtained lithium iron phosphate cathode material possess favorable dispersibility, low agglomeration degree and high compacted density, and a cathode sheet prepared from the lithium iron phosphate cathode material has the characteristics of uniform areal density and high peel strength, so that a battery prepared from the cathode sheet has high specific capacity and superior cycling stability.

### BRIEF DESCRIPTION OF DRAWINGS

In order to more clearly explain the technical solution of the embodiments of the present disclosure, a brief introduction will be given below to the accompanying drawings required to be used in the embodiments. It should be understood that the following accompanying drawings only illustrate certain embodiments of the present disclosure, and therefore should not be regarded as restrictions on the scope. For those having ordinary skill in the art, other relevant accompanying drawings can also be obtained based on these drawings without creative efforts.
FIG. 1 shows a scanning electron microscope (SEM) image of the lithium iron phosphate cathode material provided in Example 1 of the present disclosure;
FIG. 2 shows a SEM image of the lithium iron phosphate cathode material provided in Example 8 of the present disclosure;
FIG. 3 shows a SEM image of the lithium iron phosphate cathode material provided in Comparative Example 4 of the present disclosure; and
FIG. 4 shows a Raman spectrogram of the lithium iron phosphate cathode materials provided in Example 1 and Example 4 of the present disclosure.

### DETAILED DESCRIPTION

In order to more clearly illustrate the objectives, technical solutions, and advantages of the embodiments of the present disclosure, the technical solutions of the embodiments of the present disclosure will be described clearly and completely below. The conventional conditions or conditions recommended by the manufacturers shall be followed unless specific conditions are specified in the embodiments. The reagents or instruments used of which the manufacturers are not indicated, are all commercially available conventional products.

A lithium iron phosphate cathode material is provided, comprising primary particles and secondary particles formed by agglomeration of the primary particles. The lithium iron phosphate cathode material satisfies $\frac{FSSS}{{D}_{BET}}$ =5-40 and ρ%=50%-90%, where FSSS refers to a Fisher sub-sieve size of the lithium iron phosphate cathode material, in a unit of µm; D_{BET} refers to a specific surface area particle size of the lithium iron phosphate cathode material, in a unit of µm; and ρ%=1-H%, where ρ% refers to a relative density of the secondary particles, and H% refers to a porosity of the secondary particles.

The present disclosure provides a lithium iron phosphate cathode material that simultaneously satisfies the conditions that $\frac{FSSS}{{D}_{BET}}$ and ρ% are within a specific range. The lithium iron phosphate cathode material exhibits good dispersibility, low agglomeration degree, and high compacted density. A cathode sheet prepared from the lithium iron phosphate cathode material as the cathode active material demonstrates uniform areal density and high peel strength, so that a battery prepared from the cathode sheet has high specific capacity and superior cycling stability.

Specifically, $\frac{FSSS}{{D}_{BET}}$ reflects a ratio of a particle size of secondary particles to a particle size of primary particles. The better the dispersibility and the lower the agglomeration degree of the lithium iron phosphate cathode material, the smaller the $\frac{FSSS}{{D}_{BET}}$. The value of $\frac{FSSS}{{D}_{BET}}$ of the lithium iron phosphate cathode material provided by the present disclosure is in a range of 5-40, and a too high or too low $\frac{FSSS}{{D}_{BET}}$ may lead to a decrease in the tap density of the cathode material, thereby leading to a reduction in the specific capacity of the battery prepared from the lithium iron phosphate cathode material. If $\frac{FSSS}{{D}_{BET}}$ is too high, it indicates that the lithium iron phosphate cathode material has a high agglomeration degree, and there are often large pores between the agglomerated secondary particles, resulting in low tap density; while if $\frac{FSSS}{{D}_{BET}}$ is too low, it indicates that the lithium iron phosphate cathode material is mainly composed of dispersed primary particles, and due to the fact that the porosity of the secondary particles (agglomerates) is usually lower than that of the powder of primary particles in the compacted state, a too low agglomeration degree may also cause a reduction in the tap density.

In some embodiments, the value of $\frac{FSSS}{{D}_{BET}}$ is in a range of 10-30, for example, it may be any value or within any range between any two values of 10, 12, 15, 18, 20, 22, 25, 28, or 30.

In some embodiments, the value of FSSS is in a range of 0.4-5 µm, for example, it may be any value or within any range between any two values of 0.4 µm, 0.5 µm, 0.8 µm, 1 µm, 1.5 µm, 2 µm, 2.5 µm, 3 µm, 3.5 µm, 4 µm, 4.5 µm, or 5 µm. In some other embodiments, the value of FSSS is in a range of 1-2.5 µm.

Fisher sub-sieve size (FSSS) is an average particle size of the lithium iron phosphate cathode material as measured by a constant-flow air permeability method, the mechanism of which is as follows: air at constant pressure and constant flow is passed through a tube filled with powder sample, a pressure drop across the sample is measured, and the specific surface area and average particle size of the powder are calculated according to a formula; because the measurement is performed under constant-pressure and constant-flow conditions, the derived specific surface area is an external specific surface area of the powder. Consequently, the obtained average particle size can reflect the particle size of the agglomerates.

The specific surface area particle size (*D_{BET}*) refers to a volume-area mean diameter, and is defined that the specific surface area of particles possessing this diameter is equal to an average value of the specific surface areas of all particles. It is determined and calculated based on measurements from a nitrogen adsorption-desorption method, and the mechanism of which is as follows: by measuring an amount of nitrogen adsorbed by the powder sample at different pressure, the specific surface area (BET) of the powder is calculated according to a formula; since the measurement involves pressurized gas and the collected data represent the total gas adsorption capacity, the resulting specific surface area corresponds to the total specific surface area of the powder. Consequently, the particle size derived from the BET-specific surface area can reflect the particle size of the primary particles. The calculation formula is as follows: ${D}_{BET} = \frac{6}{BET \times {ρ}_{LFP}}$, where BET refers to a specific surface area of the lithium iron phosphate cathode material, in a unit of m²/g, and *ρ_{LFP}* refers to a true density of the lithium iron phosphate cathode material, in a unit of g/cm³. According to the definition of *D_{BET}*, $\frac{4 π {\left(\frac{{D}_{BET}}{2}\right)}^{2}}{\frac{4}{3} π {\left(\frac{{D}_{BET}}{2}\right)}^{3} \times {ρ}_{LFP}} = \frac{{\sum }_{i = 1}^{n} 4 π {\left(\frac{{D}_{i}}{2}\right)}^{2}}{{\sum }_{i = 1}^{n} \frac{4}{3} π {\left(\frac{{D}_{i}}{2}\right)}^{3} {ρ}_{LFP}}$, that is ${D}_{BET} = \frac{{\sum }_{i = 1}^{n} {{D}_{i}}^{3}}{{\sum }_{i = 1}^{n} {{D}_{i}}^{2}}$; meanwhile, $BET \left({m}^{2}/g\right) = \frac{{\sum }_{i = 1}^{n} 4 π {\left(\frac{{D}_{i}}{2}\right)}^{2}}{{\sum }_{i = 1}^{n} \frac{4}{3} π {\left(\frac{{D}_{i}}{2}\right)}^{3} {ρ}_{LFP}} = \frac{6 {\sum }_{i = 1}^{n} {{D}_{i}}^{2}}{{ρ}_{LFP} {\sum }_{i = 1}^{n} {{D}_{i}}^{3}}$; and therefore ${D}_{BET} = \frac{6}{BET \times {ρ}_{LFP}}$.

In some embodiments, the value of BET is ≤20 m²/g. In some embodiments, the value of BET is in a range of 9-15 m²/g, for example, it may be any value or within any range between any two values of 9 m²/g, 10 m²/g, 11 m²/g, 12 m²/g, 13 m²/g, 14 m²/g, or 15 m²/g. In some embodiments, the value of *ρ_{LFP}* is in a range of 3.3-3.6 g/cm³, for example, it may be any value or within any range between any two values of 3.3 g/cm³, 3.4 g/cm³, 3.5 g/cm³, or 3.6 g/cm³.

The relative density of the lithium iron phosphate secondary particles refers to a ratio of an apparent density to a true density of lithium iron phosphate. The apparent density refers to a ratio of the mass of a material to its apparent volume. The apparent volume is the sum of the solid volume and the pore volume, that is, the apparent volume is the sum of the solid volume and pore volume of lithium iron phosphate. The true density refers to an actual mass per unit volume of a solid material in a completely dense state, that is, the density after removing the internal pores. The relative density of the secondary particles can be calculated from the porosity (H%) of the secondary particles, that is *ρ*_{%}=1-H%, the higher the porosity of the secondary particles, the lower the relative density, indicating that the structure of the secondary particles is looser, and they are easier to disperse, and the higher the compacted density. The cathode sheet prepared therefrom exhibits uniform areal density and high peel strength, and thus has high specific capacity and cycling stability. The value of *ρ*_{%} in the present disclosure is 50%-90%. If *ρ*_{%} is too high, the secondary particles are difficult to disperse, and if *ρ*_{%} is too low, it will reduce the tap density of the lithium iron phosphate cathode material. In some embodiments, the value of *ρ*_{%} is 50% to 70%.

In some embodiments, the agglomeration degree N of the lithium iron phosphate cathode material is less than 25000, wherein $N = {\left(\frac{FSSS}{{D}_{BET}}\right)}^{3} \times ρ %$.

In some embodiments, the agglomeration degree N of the lithium iron phosphate cathode material is 200-12000. The lithium iron phosphate cathode material that satisfies the value of agglomeration degree has more suitable compacted density, and the areal density of the electrode sheet prepared therefrom is more uniform, and thus has higher specific capacity and cycling stability.

The agglomeration degree N reflects the number of primary particles contained in the secondary particles of the lithium iron phosphate cathode material. Specifically, the agglomeration degree $N = \frac{Bulk Volume of Lithium Iron Phosphate In Secondary Particles}{Volume Of Primary Particles}$ $= \frac{{V}_{Secondary particles} \times ρ%}{{V}_{Primary particles}} = {\left(\frac{FSSS}{{D}_{BET}}\right)}^{3} \times ρ %$; the smaller the value of the agglomeration degree N, the lower the agglomeration degree and the better the uniformity of the electrode sheet. However, if the agglomeration degree N is too low, it indicates that the relative density *ρ*_{%} or $\frac{FSSS}{{D}_{BET}}$ of the lithium iron phosphate cathode material is too low, which will lead to too low tap density, resulting in a lower specific capacity.

In some embodiments, the compacted density of the lithium iron phosphate cathode material is 1.9-3.0 g/cm³, which is measured under 3T pressure.

In some embodiments, the lithium iron phosphate cathode material comprises an active material matrix and a carbon material. A general formula of the active material matrix is Li₁₋ₓAₓFe_{1-y}M_{y}(PO_{4-z})D_{z}, where A is one or more selected from the group consisting of Na and Mg; M is one or more selected from the group consisting of Al, Ni, Co, Mn, Ti, La, Ce, Cr, Mo, Ca, Ga, V, Nb, Zr, In, Zn and Y; D is one or more selected from the group consisting of F, S, N, and Cl; 0≤x≤0.1; 0≤y≤0.1 and 0≤z≤0.1; and a mass of the carbon material is 1% to 5% of a mass of the lithium iron phosphate cathode material.

In addition, the present disclosure provides a preparation method of the lithium iron phosphate cathode material, which comprises the following steps:
S1, Mixing iron phosphate and a lithium salt to obtain a raw material mixture.

Before mixing the iron phosphate and the lithium salt, the iron phosphate is first added to a jet mill for milling; and the milling enables refinement of the iron phosphate particles, which is beneficial for subsequent uniform mixing with the lithium salt.

In this embodiment, the lithium salt includes, but is not limited to, at least one of lithium carbonate, lithium oxalate, and lithium acetate. When mixing the iron phosphate and the lithium salt, a dopant may also be added according to actual product requirements, and the iron phosphate and the dopant are added according to a stoichiometric ratio. The dopant includes, but is not limited to, at least one of a salt, an oxide, and a hydroxide of a doping element.

S2, Mixing the raw material mixture with carbon sources having different vaporization temperatures to obtain a precursor.

The carbon sources having different vaporization temperatures are first prepared into a carbon source solution with a mass percentage concentration of 10% to 30% before being mixed with the raw material mixture, subsequently the carbon source solution is atomized and then mixed with the raw material mixture, wherein an atomization pressure is 0.1-1.5 MPa. The raw material mixture is mixed with the carbon sources having different vaporization temperatures in a jet mill, and an airflow is introduced during mixing, wherein the airflow has a pressure of 0.5-1.5 MPa and a temperature of 25-120°C; and the mixing is performed for a total mixing time of 15-60 minutes.

In this embodiment, the carbon sources having different vaporization temperatures comprise a first carbon source having a vaporization temperature of 400-600 °C, a second carbon source having a vaporization temperature of 200-400 °C, and a third carbon source having a vaporization temperature of 100-200 °C. The raw material mixture is first mixed with the first carbon source, then mixed with the second carbon source, and finally mixed with the third carbon source. A total mass of the carbon sources having different vaporization temperatures is 15% to 25% of a mass of the raw material mixture. When the raw material mixture is mixed with the carbon sources having different vaporization temperatures, a mass ratio of the first carbon source, the second carbon source, and the third carbon source is 0-15:2.5-15:2.5-10. When the mass of the first carbon source is 0, it indicates that the carbon sources only include the second and third carbon sources.

The first carbon source includes, but is not limited to, at least one of polyimide, polyphenylene ether, and polyetherimide. The second carbon source includes, but is not limited to, at least one of glucose, polyethylene glycol, starch, sucrose, maltose, cellulose, chitosan, polyacrylonitrile, benzyl alcohol, and glycerol. The third carbon source includes, but is not limited to, at least one of phenol, ethylene glycol, propylene glycol, butylene glycol, isopropanol, sorbitol, erythritol, fructose, malic acid, citric acid, and salicylic acid.

Since the above first carbon source, compared to the second or third carbon source, exhibits stronger molecular chain rigidity, a higher conjugation degree, and a larger amount of solid residual after decomposition, it achieves a higher graphitization degree, which is beneficial for improving the conductivity of the cathode material. On the one hand, due to the stronger hydrophobicity of the first carbon source compared to the second or third carbon source, the first carbon source, when pre-mixing with the raw material mixture, can better coat onto the surface of the material particles. On the other hand, such pre-mixing can make the conductive carbon network formed during calcination to be tightly distributed on the surface of the lithium iron phosphate particles.

S3, Subjecting the precursor to staged calcinations in an inert atmosphere, followed by crushing, sieving, and magnetic separation to obtain the lithium iron phosphate cathode material.

The staged calcinations comprise a first stage, a second stage, and a third stage. In the first stage, the temperature is raised at a rate of 1 to 2 °C/min to 180-220 °C and maintained at this temperature for 1 to 2 hours; in the second stage, the temperature is raised at a rate of 2 to 3 °C/min to 380-420 °C and maintained at this temperature for 2 to 4 hours; and in the third stage, the temperature is v at a rate of 4 to 6 °C/min to 650-750 °C and maintained at this temperature for 4 to 8 hours..

The above lithium iron phosphate cathode material can be widely used in the preparation of batteries, and the resulting batteries have excellent electrochemical performance. In this regard, the present disclosure further provides a lithium-ion battery comprising the above lithium iron phosphate cathode material.

The battery provided by the present disclosure typically includes a cathode sheet, an anode sheet, a separator arranged between the cathode and anode sheets, and an electrolyte solution. The method of preparing the battery is considered known to those skilled in the art. For example, the cathode sheet, the separator, and the anode sheet may each be provided as a laminate, which can be cut to a target size and then stacked in sequence, or alternatively wound to the target size to form a battery cell. The cell may further be combined with the electrolyte solution to form a battery.

In the batteries provided by the present disclosure, the anode sheet typically includes an anode current collector and an anode active material layer disposed on a surface of the anode current collector. The anode active material layer typically includes an anode active material. The anode active material can be various materials suitable for use as the anode active material of the lithium-ion batteries in the art. For example, the anode active material can include, but is not limited to, one or more of graphite, soft carbon, hard carbon, carbon fiber, mesophase carbon microspheres, silicon-based materials, tin-based materials, lithium titanate, or other metals that can form alloys with lithium, etc., or a combination thereof. The graphite can be one or more of artificial graphite, natural graphite, and modified graphite, or a combination thereof; the silicon-based material can be one or more of elemental silicon, silicon oxides, silicon-carbon composites, and silicon alloys, or a combination thereof; and the tin-based material can be one or more of elemental tin, tin oxides, and tin alloys, or a combination thereof. The anode current collector is usually a structure or component that collects electric current, and it can be various materials suitable for use as the anode current collector of the lithium-ion batteries in the art. For example, the anode current collector may include, but is not limited to, metal foils, etc., and more specifically, it may include, but is not limited to, a copper foil.

In the batteries provided by the present disclosure, the separator can be various materials suitable for use as the separator of the lithium-ion batteries in the art. For example, it may include, but is not limited to, one or more of polyethylene, polypropylene, polyvinylidene fluoride, aramid, polyethylene terephthalate, polytetrafluoroethylene, polyacrylonitrile, polyimide, polyamide, polyester, and natural fibers, etc., or a combination thereof.

In the batteries provided by the present disclosure, the electrolyte solution can be various electrolyte solutions suitable for the lithium-ion batteries in the art. For example, the electrolyte solution usually includes an electrolyte and a solvent, and the electrolyte usually includes a lithium salt, etc. More specifically, the lithium salt may be an inorganic lithium salt and/or an organic lithium salt, etc., and the lithium salt may be one or more of LiPF₆, LiBF₄, LiN(SO₂F)₂ (abbreviated as LiFSI), LiN(CF₃SO₂)₂ (abbreviated as LiTFSI), LiClO₄, LiAsF₆, LiB(C₂O₄)₂ (abbreviated as LiBOB), and LiBF₂C₂O₄ (abbreviated as LiDFOB), or a combination thereof. For example, the electrolyte may have a concentration between 0.8 mol/L and 1.5 mol/L. The solvent can be various solvents suitable for the electrolyte solution of the lithium-ion batteries in the art. The solvent for electrolyte solution is usually a non-aqueous solvent, preferably an organic solvent, and specifically may include, but is not limited to, ethylene carbonate, propylene carbonate, butylene carbonate, amylene carbonate, dimethyl carbonate, diethyl carbonate, dipropyl carbonate, and methyl ethyl carbonate, etc., or their halogenated derivatives, or a combination thereof.

The features and performance of the present disclosure are further described in detail below in conjunction with the Examples.

The present disclosure provided the lithium iron phosphate cathode materials as shown in Tables 1, 2, and 3, which were subjected to testing.

The assembly of the button batteries included the following steps:

### (1) Preparation of a slurry

A binder, polyvinylidene fluoride (PVDF), was added to a portion of N-methyl-2-pyrrolidone (NMP) and stirred in a dual-planetary mixer at a revolution speed of 80 rpm and a rotation speed of 4500 rpm for 120 minutes to obtain a binder solution with a solid content of 7%; acetylene black was added to the binder solution and stirred at a revolution speed of 80 rpm and a rotation speed of 4500 rpm for 60 minutes to obtain a conductive slurry; the lithium iron phosphate cathode material and the rest NMP were added to the conductive slurry, and stirred at a revolution speed of 80 rpm and a rotation speed of 6500 rpm for 90 minutes, and then stirred at a rotation speed of 15 rpm for 30 minutes for defoaming to obtain a cathode slurry with a solid content of 65%.

A mass ratio of lithium iron phosphate cathode material, acetylene black, and PVDF was 97.2:0.8:2, and the acetylene black had an average particle size of 40 nm and a specific surface area of 65 m²/g.

### (2) Preparation of an electrode sheet

The cathode slurry was coated onto an aluminum foil substrate using a double-sided reciprocating coater, and then dried to obtain the cathode sheet. During calendering, a main roller temperature was set to 40 °C, and a main roller pressure was controlled to achieve a compacted density of 2.55 g/cm³ for the electrode sheet.

### (3) Assembly of a coin cell

A lithium foil was used as the anode sheet, a polypropylene porous membrane was used as the separator, and the electrolyte solution was prepared by dissolving 1 mol of LiPF₆ in 1 L of a mixed solvent of ethylene carbonate (EC) and dimethyl carbonate (DMC) at a volume ratio of 1:1. The cathode sheet, the anode sheet, the electrolyte solution, and the separator were assembled into a coin cell in an argon-filled glove box.

The testing methods included:
(1) Content of carbon material: measured using a high-frequency infrared carbon-sulfur analyzer according to YS/T 1028.4-2015.
(2) True density (ρ_{LFP}): determined by a Helium Gas Method according to GB/T 24203-2024.
(3) Fisher sub-sieve size (FSSS): measured according to GB/T 3249-2022.
(4) Specific surface area (BET): determined using a Micromeritics Physisorption Analyzer based on a BET method according to GB/T 19587-2017, then *D_{BET}* was calculated according to ${D}_{BET} = \frac{6}{BET \times {ρ}_{LFP}}$, and subsequently, $\frac{FSSS}{{D}_{BET}}$ was further calculated.
(5) Relative density of secondary particles (ρ%): all or part of the secondary particles were separated from the test sample, and then the porosity (H%) of which was determined, and the relative density of the secondary particles was calculated based on ρ%=1-H%.

In the embodiments of the present disclosure, the secondary particles were separated with the following method: the test sample was subjected to vibratory sieving with a 10-mesh interval between adjacent screens, yielding several size-fractionated subsamples. Each sub-sample was gravity-settled (in an aqueous medium) to obtain a precipitate. The precipitate from each sub-sample was collected and dried at room temperature to yield the secondary particles corresponding to the sub-sample, then the secondary particles from all sub-samples were combined.

In the embodiments of the present disclosure, the porosity of secondary particles was determined using a scanning electron microscopy (SEM) as follows: the magnification was adjusted until there was only one complete cross-section of a secondary particle in the field of view, and an SEM image was captured; then, the captured SEM image was analyzed using Image-Pro Plus software to calculate the porosity, wherein the porosity= (a total area of all pores of the secondary particles within the cross-section/ cross-sectional area of the secondary particles) ×100%.
(6) The formula for calculating the agglomeration degree N is $N = {\left(\frac{FSSS}{{D}_{BET}}\right)}^{3} \times ρ %$.
(7) Compacted density (CD): determined according to GB/T 24533-2009, with a final pressure of 3T (600 MPa).
(8) Areal density testing: the areal density of the electrode sheet was determined by X-ray fluorescence spectroscopy (XRF), which comprised: the electrode sheet to be tested was cut into 20 small sample sheets of the same size for testing to obtain the content of each element; the mass and areal density of the lithium iron phosphate cathode material were calculated, wherein an average value was taken as the mean areal density; and then a standard deviation of the areal density sample was calculated.
(9) Peel strength testing: determined using a 180 °peel testing method on an Instron 3365 tensile tester at a crosshead speed of 60 mm/min.
(10) Electrode sheet resistance: determined using a BER2100 multifunctional electrode sheet resistance meter from Initial Energy Science & Technology, with 10 different positions tested, and a mean value and a sample standard deviation were calculated.
(11) Electrochemical performance: galvanostatic charge-discharge and cycling performance tests of the battery were carried out with a LAND battery test system at 25 °C, within a charge-discharge voltage range of 2.5-4.2 V.

The test results are shown in Tables 1, 2, and 3.

**Table 1. Statistical Table of General Formulas and Parameter Detection for Different Samples**

| Samples | General formulas | Content of carbon material, wt% | *ρ_{LFP}*, g/cm³ | FSSS, µm | BET, m²/g | $\frac{FSSS}{{D}_{BET}}$ | ρ_{%}, % | Agglome ration degree N |
|---|---|---|---|---|---|---|---|---|
| Example 1 | LiFePO₄ | 1.27 | 3.58 | 1.58 | 12.9 | 12.16 | 61 | 1097 |
| Example 2 | Li[Fe_{0.986}Ti_{0.014}]PO₄ | 1.38 | 3.55 | 4.9 | 11.25 | 32.62 | 86 | 29838 |
| Example 3 | Li_{0.998}Na_{0.002}FePO_{3.998} F_{0.002} | 1.11 | 3.6 | 1.22 | 9.22 | 6.75 | 72 | 221 |
| Example 4 | LiFePO₄ | 1.14 | 3.58 | 0.91 | 13.39 | 7.59 | 50 | 192 |
| Example 5 | LiFePO₄ | 1.24 | 3.58 | 3.58 | 12.21 | 26.08 | 62 | 11000 |
| Example 6 | Li[Fe_{0.988}Ti_{0.012}]PO₄ | 3.62 | 3.38 | 4.92 | 11.72 | 32.48 | 65 | 22279 |
| Example 7 | Li[Fe_{0.988}Ti_{0.012}]PO₄ | 3.52 | 3.38 | 4.53 | 12.62 | 32.20 | 51 | 17035 |
| Comparative Example 1 | LiFePO₄ | 0.30 | 3.59 | 0.74 | 9.84 | 4.36 | 92 | 76 |
| Comparative Example 2 | LiFePO₄ | 1.21 | 3.58 | 0.95 | 8.22 | 4.66 | 62 | 63 |
| Comparative Example 3 | Li[Fe_{0.986}Ti₀.₀₁₄]PO₄ | 3.05 | 3.42 | 4.78 | 11.95 | 32.56 | 95 | 32790 |
| Comparative Example 4 | LiFePO₄ | 1.34 | 3.57 | 6.32 | 11.54 | 43.40 | 48 | 39225 |

**Table 2. Statistical Table of Physical Performance Testing of Different Samples**

| Samples | CD, g/cm³ | Standard deviation of areal density sample, g/m² | Peel strength, N/m | Resistance of electrode sheet, Ω | Standard deviation of electrode sheet resistance sample, Ω |
|---|---|---|---|---|---|
| Example 1 | 2.51 | 2.22 | 22 | 0.83 | 0.023 |
| Example 2 | 2.22 | 4.79 | 18 | 0.98 | 0.052 |
| Example 3 | 2.34 | 2.24 | 21 | 0.84 | 0.018 |
| Example 4 | 2.28 | 1.95 | 24 | 0.84 | 0.012 |
| Example 5 | 2.48 | 2.85 | 20 | 0.88 | 0.031 |
| Example 6 | 2.31 | 3.12 | 19 | 0.89 | 0.035 |
| Example 7 | 2.25 | 2.76 | 20 | 0.85 | 0.027 |
| Comparative Example 1 | 2.15 | 0.84 | 24 | 0.87 | 0.011 |
| Comparative Example 2 | 2.12 | 0.95 | 25 | 0.80 | 0.011 |
| Comparative Example 3 | 2.08 | 5.88 | 16 | 1.05 | 0.058 |
| Comparative Example 4 | 2.01 | 6.03 | 16 | 1.17 | 0.061 |

**Table 3. Statistical Table of Electrochemical Performance Testing of Different Samples**

| Samples | Specific discharge capacity at 0.1C, mAh/g | Specific discharge capacity at 1C, mAh/g | Capacity retention rate after 200 cycles at 1C, % |
|---|---|---|---|
| Example 1 | 163 | 147 | 98.1 |
| Example 2 | 158 | 134 | 95.7 |
| Example 3 | 160 | 140 | 98.6 |
| Example 4 | 159 | 141 | 98.8 |
| Example 5 | 161 | 141 | 97.8 |
| Example 6 | 160 | 138 | 97.6 |
| Example 7 | 161 | 142 | 97.8 |
| Comparative Example 1 | 156 | 135 | 98.5 |
| Comparative Example 2 | 156 | 137 | 98.4 |
| Comparative Example 3 | 155 | 132 | 94.8 |
| Comparative Example 4 | 154 | 133 | 94.2 |

From the above Tables 1, 2, and 3, it can be seen that the lithium iron phosphate cathode materials in the Examples of the present disclosure have higher compacted density and better comprehensive performance as compared with those of the Comparative Examples. The $\frac{FSSS}{{D}_{BET}}$of less than 5 or greater than 40, or ρ_{%} of greater than 90% for the cathode material will result in an excessively low compacted density, thereby affecting the specific charge-discharge capacity. Specifically, $\frac{FSSS}{{D}_{BET}}$ reflects a ratio of a particle size of the secondary particles to a particle size of the primary particles, thus indicating the agglomeration degree; ρ_{%} can reflect the compactness of agglomeration of the primary particles in the secondary particles. An excessively low compactness of agglomeration makes it easy for particles to be completely crushed and rearranged during compaction, or an excessively low agglomeration degree leaves too much interparticle void, which is not beneficial for improving the compacted density. Conversely, an overly high agglomeration degree or compactness degree makes it difficult for the secondary particles to be crushed during the compaction process, so that an excessive void volume formed by bridging of large particles hinders attainment of a high compacted density. Therefore, it is necessary to maintain the $\frac{FSSS}{{D}_{BET}}$ and ρ_{%} within a reasonable range in order to achieve a high compacted density of the cathode material. Since the compacted density will affect the specific capacity and rate capability of the material, the Comparative Examples exhibit inferior electrochemical performance as compared with Example 1.

The lithium iron phosphate cathode material of Example 2 conforms to the range of $\frac{FSSS}{{D}_{BET}} = 5 - 40$ and ρ%=50%-90%, but its agglomeration degree N is not below 25000. In this case, compared to other Examples, the compacted density of the lithium iron phosphate cathode material is lower, resulting in reduced peel strength of the electrode. Due to too large agglomeration degree, the standard deviation of the areal density sample and the standard deviation of the electrode sheet resistance sample are both large, resulting in lower compacted density and lower specific surface area, which reduces the deintercalation rate of lithium, resulting in poorer rate capability and inferior cycling stability. The agglomeration degree N of the cathode materials in the other examples is less than 25000, indicating superior overall performance.

Compared to Example 6, Examples 1, 3 and 5 have higher compacted density. In addition, they also have the characteristics of higher peel strength of electrode sheet, lower standard deviation of areal density samples and standard deviation of the electrode sheet resistance sample, and therefore have higher rate capability and capacity retention rate. It indicates that the comprehensive performance of the lithium iron phosphate cathode material is better when the agglomeration degree ranges from 200 to 12000.

Compared to Examples 1, 3, and 5, Example 4 shows a lower compacted density. This is attributed to its agglomeration degree being less than 200, indicating lower agglomeration degree of the cathode material. Due to the low agglomeration degree, the number of primary particles is relatively large, resulting in a smaller overall particle size, and consequently a lower compacted density, which further adversely affects the specific capacity of the material. Due to the low agglomeration degree of the cathode material, both the standard deviation of the areal density sample and the standard deviation of the electrode sheet resistance sample are low. In addition, due to the low agglomeration degree, the number of primary particles is relatively large, resulting in a smaller overall particle size and a larger specific surface area, which enhances the adhesion between the cathode material coating and the current collector, thereby enhancing the peel strength.

Examples 1 and 5, and Comparative Example 2 have similar chemical composition and ρ_{%}, but different $\frac{FSSS}{{D}_{BET}}$. A comparison of their performance data reveals that as the $\frac{FSSS}{{D}_{BET}}$ increases, the compacted density first increases and then decreases. This is because both excessively high and excessively low agglomeration degrees can lead to an increase in interparticle void volume, thereby reducing the compacted density. Under the condition of similar ρ_{%}, an increase in the $\frac{FSSS}{{D}_{BET}}$ indicates a higher number of primary particles contained in a single secondary particle, which enhances the overall compacted density. However, when $\frac{FSSS}{{D}_{BET}}$ is further increased, it indicates that the particle size of the secondary particles is larger or the particle size of the primary particles from which the secondary particles are formed is smaller, both of which disrupt the particle size grading balance and reduce compacted density. The compacted density has a significant impact on the specific capacity of the lithium iron phosphate cathode materials. A larger $\frac{FSSS}{{D}_{BET}}$ results in greater standard deviation of the areal density sample, lower peel strength, higher electrode sheet resistance, and larger standard deviation of the electrode sheet resistance sample. Ultimately, Example 1 exhibits excellent electrochemical performance, indicating that the $\frac{FSSS}{{D}_{BET}}$ of the lithium iron phosphate cathode should be maintained within a certain range, such that its agglomeration degree N is maintained within a certain range.

Examples 2, 6, and 7, and Comparative Example 3 have similar chemical composition and $\frac{FSSS}{{D}_{BET}}$ but different ρ_{%}. A comparison of their performance data reveals that as the ρ_{%} increases, the compacted density first increases and then decreases. This is because the secondary particles with higher relative density can, on the other hand, increase the overall compacted density, and on the other hand, are resistant to crushing during compaction. However, larger secondary particles tend to form bridging structures, which increase interparticle void volume and thereby reduce the compacted density. In addition, as the ρ_{%} increases, the aggregation degree N of the lithium iron phosphate cathode material becomes larger, resulting in a decrease in peel strength. With increasing ρ_{%}, the higher aggregation degree N leads to increased electrode sheet resistance, as well as larger standard deviation of the areal density sample and larger standard deviation of electrode sheet resistance sample. Ultimately, Example 7 exhibits excellent electrochemical performance, indicating that the ρ_{%} or agglomeration degree N of the lithium iron phosphate cathode material should be maintained within a certain range.

The present disclosure further provides a preparation method of the products in the Examples and the products in Comparative Examples.

### Method Example 1

A preparation method for a lithium iron phosphate cathode material was provided, and a product obtained therefrom was the product of the above Example 1. The preparation method of this Example included the following steps.
(1) Introducing air into a jet mill for milling anhydrous iron phosphate with a Dv50 of 8.52 µm, to obtain anhydrous iron phosphate with a Dv50 of 0.4-0.5 µm.
(2) Mixing the anhydrous iron phosphate obtained in step (1) with lithium carbonate to obtain a raw material mixture, preparing a first carbon source solution, a second carbon source solution, and a third carbon source solution; successively introducing the first carbon source solution, second carbon source solution, and third carbon source solution after atomization into the jet mill using air as a medium to mill and coat the raw material mixture, thereby obtaining a first precursor, a second precursor, and a third precursor, respectively.

The anhydrous iron phosphate and the lithium carbonate were mixed according to n(Fe):n(Li)=1:1.05.

The first carbon source solution was a 10 wt% solution of polyimide in DMF; the second carbon source solution was a 20 wt% glucose aqueous solution; and the third carbon source solution was a 10 wt% solution of ethylene glycol in ethanol.

A ratio of the raw material mixture, the first carbon source solution, the second carbon source solution, and the third carbon source solution was 10g:5g:2.5g:5g.

The airflow has a pressure of 1±0.1 MPa. When the raw material mixture was mixed with the first carbon source solution, the airflow had a temperature of 120 °C, and the mixing was carried out for 20 minutes. When the first precursor was mixed with the second carbon source solution, the airflow had a temperature of 100 °C, and the mixing was carried out for 15 minutes. When the second precursor was mixed with the third carbon source solution, the airflow had a temperature of 80 °C, and the mixing was carried out for 15 minutes.

An atomization pressure was 1 MPa.

(3) Placing the third precursor in a rotary kiln for a three-stage calcination under a nitrogen atmosphere, and then successively subjecting to mechanical crushing, sieving, and magnetic separation to obtain the lithium iron phosphate cathode material.

The three-stage calcination included: heating to 200 °C at a rate of 1 °C/min and maintaining at this temperature for 1 hour in the first stage; heating to 400 °C at a rate of 2 °C/min and maintaining at this temperature for 3 hours in the second stage; and heating to 700 °C at a rate of 5 °C/min and maintaining at this temperature for 6 hours in the third stage.

### Method Example 2

A preparation method for the lithium iron phosphate cathode material was provided, and a product obtained therefrom was the product of the above Example 2. The preparation method of this Example included the following steps.
(1) Subjecting anhydrous iron phosphate with a Dv50 of 8.52 µm, lithium acetate, titanyl sulfate, a first carbon source, a second carbon source, and a third carbon source to dry mixing to obtain a raw material mixture; and placing the raw material mixture in a ball milling device for grinding and crushing to obtain a precursor, wherein a Dv50 of the precursor was controlled to 0.4-0.5 µm.

The anhydrous iron phosphate, titanyl sulfate and lithium acetate were mixed according to n(Fe):n(Ti):n(Li)=0.986:0.014:1.05.

The first carbon source was polyimide; the second carbon source was glucose; and the third carbon source was erythritol.

A ratio of the total mass of anhydrous iron phosphate, lithium acetate, and titanyl sulfate, to the first carbon source, to the second carbon source, and to the third carbon source was 10g:0.7g:0.7g:0.7g.

Conditions for grinding and crushing in the ball milling device: a frequency of 30 Hz; zirconia beads with a diameter of 1 mm; a bead-to-charge volume ratio of 1:1; a rotate speed of 600 rpm; a ball milling time of 3 hours; and room temperature.

(2) Placing the precursor in a rotary kiln for a three-stage calcination under a nitrogen atmosphere, and then successively subjecting to mechanical crushing, sieving, and magnetic separation to obtain the lithium iron phosphate cathode material.

The three-stage calcination included: heating to 200 °C at a rate of 1 °C/min and maintaining at this temperature for 1 hour in the first stage; heating to 400 °C at a rate of 2 °C/min and maintaining at this temperature for 2 hours in the second stage; and heating to 700 °C at a rate of 5 °C/min and maintaining at this temperature for 8 hours in the third stage.

### Method Example 3

A preparation method for the lithium iron phosphate cathode material was provided, and a product obtained therefrom was the product of the above Example 3. The preparation method of this Example included the following steps.

The differences from Method Example 1 were provided as below.

The medium of the jet mill was nitrogen.

In the step (2), lithium oxalate was used as the lithium source; and sodium fluoride was further added to the raw material mixture, and the anhydrous iron phosphate, sodium fluoride and lithium oxalate were mixed according to n(Fe):n(Na):n(Li)=0.988:0.002:1.05.

A 10 wt% solution of polyphenylene ether in toluene was used as the first carbon source solution; a 20 wt% solution of polyethylene glycol-400 in ethanol was used as the second carbon source solution; and a 10 wt% solution of fructose in ethanol was used as the third carbon source solution. A ratio of the raw material mixture, first carbon source solution, second carbon source solution, and third carbon source solution was 10:2.5:2.5:7.5.

An airflow had a pressure of 0.8±0.1 MPa. When the raw material mixture was mixed with the first carbon source solution, the airflow had a temperature of 120 °C and the mixing was carried out for 15 minutes. When the first precursor was mixed with the second carbon source solution, the airflow had a temperature of 70 °C and the mixing was carried out for 15 minutes. When the second precursor was mixed with the third carbon source solution, the airflow had a temperature of 70 °C and the mixing was carried out for 30 minutes.

The atomization pressure was 0.8 MPa.

In the step (3), the three-stage calcination included: heating to 200 °C at a rate of 1 °C/min and maintaining at this temperature for 2 hours in the first stage; heating to 400 °C at a rate of 2 °C/min and maintaining at this temperature for 2 hours in the second stage; and heating to 650 °C at a rate of 5 °C/min and maintaining at this temperature for 5 hours in the third stage.

### Method Example 4

A preparation method for the lithium iron phosphate cathode material was provided, and a product obtained therefrom was the product of the above Example 4. The preparation method of this Example included the following steps.

The differences from Method Example 1 were provided as below.

In the step (2), lithium oxalate was used as the lithium source; no first carbon source was added, the second carbon source solution was a 20 wt% solution of polyethylene glycol-400 in ethanol; the third carbon source solution was a 10 wt% solution of ethylene glycol in ethanol. A ratio of the raw material mixture, second carbon source solution, and third carbon source solution was 10:5:8.

An airflow had a pressure of 1.5±0.1 MPa. When the raw material mixture was mixed with the second carbon source solution, the airflow had a temperature of 80 °C and the mixing was carried out for 30 minutes. When the second precursor was mixed with the third carbon source solution, the airflow had a temperature of 80 °C and the mixing was carried out for 20 minutes.

The atomization pressure was 1 MPa.

In the step (3), the three-stage calcination included: heating to 200 °C at a rate of 1 °C/min and maintaining at this temperature for 2 hours in the first stage; heating to 400 °C at a rate of 2 °C/min and maintaining at this temperature for 4 hours in the second stage; and heating to 650 °C at a rate of 5 °C/min and maintaining at this temperature for 5 hours in the third stage.

### Method Example 5

A preparation method for the lithium iron phosphate cathode material was provided, and a product obtained therefrom was the product of the above Example 5. The preparation method of this Example included the following steps.

The differences from Method Example 1 were provided as below.

In the step (2), the first carbon source solution was a 16 wt% solution of polyimide in DMF; the second carbon source solution was a 10 wt% amylose aqueous solution; the third carbon source solution was a 20 wt% solution of citric acid in ethanol. A ratio of the raw material mixture, first carbon source solution, second carbon source solution, and third carbon source solution was 10:6.25:2.5:1.25.

The atomization pressure was 0.5 MPa.

In the step (3), the three-stage calcination included: heating to 200 °C at a rate of 2 °C/min and maintaining at this temperature for 2 hours in the first stage; heating to 400 °C at a rate of 2 °C/min and maintaining at this temperature for 2 hours in the second stage; and heating to 750 °C at a rate of 5 °C/min and maintaining at this temperature for 5 hours in the third stage.

### Method Example 6

A preparation method for the lithium iron phosphate cathode material was provided, and a product obtained therefrom was the product of the above Example 6. The preparation method of this Example included the following steps.
(1) Mixing anhydrous iron phosphate with a Dv50 of 8.52 µm, lithium carbonate, titanyl sulfate, second carbon source, and third carbon source to obtain a raw material mixture; and placing the raw material mixture in a ball milling device for grinding and crushing to obtain a precursor wherein a Dv50 of the precursor was controlled to 0.4-0.5 µm.

The anhydrous iron phosphate, titanyl sulfate and lithium carbonate were mixed according to n(Fe):n(Ti):n(Li)=0.988:0.012:1.05.

The second carbon source was polyethylene glycol-400; and the third carbon source was ethylene glycol.

A ratio of the total mass of anhydrous iron phosphate, lithium carbonate, and titanyl sulfate, to the second carbon source, and to the third carbon source was 10:1.5:1.

Conditions for grinding and crushing in the ball milling device: a frequency of 30 Hz; zirconia beads with a diameter of 1 mm; a bead-to-charge volume ratio of 1:1; a rotate speed of 600 rpm; a ball milling time of 3 hours; and room temperature.

(2) Placing the precursor in a rotary kiln for a three-stage calcination under a nitrogen atmosphere, and then successively subjecting to mechanical crushing, sieving, and magnetic separation to obtain the lithium iron phosphate cathode material.

The three-stage calcination included: heating to 200 °C at a rate of 1 °C/min and maintaining at this temperature for 2 hours in the first stage; heating to 400 °C at a rate of 2 °C/min and maintaining at this temperature for 2 hours in the second stage; and heating to 750 °C at a rate of 5 °C/min and maintaining at this temperature for 6 hours in the third stage.

### Method Example 7

A preparation method for the lithium iron phosphate cathode material, and a product obtained therefrom was the product of the above Example 7. The preparation method of this Example included the following steps.

The differences from Method Example 5 were that: the raw material mixture in the step (2) further included titanyl sulfate, and the anhydrous iron phosphate, titanyl sulfate and lithium carbonate were mixed according to n(Fe): n(Ti): n(Li)=0.988:0.012:1.05; and a ratio of the raw material mixture, first carbon source solution, second carbon source solution, and third carbon source solution was 10:9.375:5:2.5.

### Method Comparative Example 1

A preparation method for a lithium iron phosphate cathode material was provided, and a product obtained therefrom was the product of the above Comparative Example 1. The preparation method of this Comparative Example included the following steps.
(1) Mixing ferrous sulfate heptahydrate, lithium hydroxide, and phosphoric acid according to n(Fe):n(Li):n(P)=3:1:1 and dispersing a resulting mixture in a mixed solvent (with a volume ratio of ethylene glycol to water of 1:1) at a ratio of 2 g:40 mL of solute to solvent, stirring uniformly and then raising the temperature to 180 °Cfor reaction for 6 hours, performing solid-liquid separation, then washing and drying to obtain the lithium iron phosphate powder.
(2) Mixing the lithium iron phosphate powder with glucose, and placing a resulting mixture in a rotary kiln for calcination under a nitrogen atmosphere, and then subjecting to mechanical crushing, sieving, and magnetic separation to obtain the lithium iron phosphate cathode material. The calcination conditions included raising the temperature to 650 °C at a rate of 5 °C/min and maintaining at this temperature for 5 hours. A mass of the glucose was 15% of the mass of the lithium iron phosphate powder.

### Method Comparative Example 2

A preparation method for a lithium iron phosphate cathode material was provided, and a product obtained therefrom was the product of the above Comparative Example 2. The preparation method of this Comparative Example included the following steps.
(1) Mixing ferrous sulfate heptahydrate, lithium hydroxide, and phosphoric acid according to n(Fe):n(Li):n(P)=3:1:1 and dispersing a resulting mixture in a mixed solvent (with a volume ratio of ethylene glycol to water of 1:1) at a ratio of 2 g:40 mL of solute to solvent, stirring uniformly and then raising the temperature to 180 °C for reaction for 6 hours, performing solid-liquid separation, then washing and drying to obtain the lithium iron phosphate powder.
(2) Mixing the lithium iron phosphate powder with a mixed carbon source, and placing a resulting mixture in a ball milling device for grinding and crushing to obtain a mixture material.

The mixed carbon source was a mixture of polyimide, glucose, and erythritol in a mass ratio of 1:1:1.

A mass of the mixed carbon source was 15% of the mass of the lithium iron phosphate powder.

Conditions for grinding and crushing in the ball milling device: a frequency of 30 Hz; zirconia beads with a diameter of 1 mm; a bead-to-charge volume ratio of 1:1; a rotate speed of 600 rpm; a ball milling time of 3 hours; and room temperature.

(3) Placing the mixture material in a rotary kiln for a three-stage calcination under a nitrogen atmosphere, and then successively subjecting to mechanical crushing, sieving, and magnetic separation to obtain the lithium iron phosphate cathode material. The three-stage calcination included: heating to 200 °C at a rate of 2 °C/min and maintaining at this temperature for 1 hour in the first stage; heating to 400 °C at a rate of 2 °C/min and maintaining at this temperature for 2 hours in the second stage; and heating to 700 °C at a rate of 5 °C/min and maintaining at this temperature for 8 hours in the third stage.

### Method Comparative Example 3

A preparation method for a lithium iron phosphate cathode material was provided, and a product obtained therefrom was the product of the above Comparative Example 3. The preparation method of this Comparative Example included the following steps.

The differences from Method Example 1 were that: the raw material mixture in the step (2) further included titanyl sulfate, and the anhydrous iron phosphate, titanyl sulfate and lithium carbonate were mixed according to n(Fe):n(Ti):n(Li)=0.986:0.014:1.05. In the step (3), a single-stage calcination was performed, which involved heating to 700 °C at a rate of 2 °C/min and maintaining at this temperature for 8 hours to obtain the lithium iron phosphate cathode material.

### Method Comparative Example 4

A preparation method for a lithium iron phosphate cathode material was provided, and a product obtained therefrom was the product of the above Comparative Example 4. The preparation method of this Comparative Example included the following steps.

The differences from Method Example 1 were that in the step (2), only a second carbon source solution was added, and in the step (3), a single-stage calcination was performed, which specifically included the following steps.
(1) The same as Method Example 1.
(2) Mixing the anhydrous iron phosphate obtained in step (1) with lithium carbonate to obtain a raw material mixture, introducing the second carbon source solution after atomization into the jet mill using air as a medium to mill and coat the raw material mixture, to obtain the precursor.

The anhydrous iron phosphate and the lithium carbonate were mixed according to n(Fe): n(Li)=1:1.05.

The second carbon source solution was a glucose aqueous solution with a concentration of 20 wt%.

A ratio of the raw material mixture to the second carbon source solution was 10g:7.5g.

An airflow had a pressure of 1±0.1 MPa. When the raw material mixture were mixed with the second carbon source solution, the airflow had a temperature of 100 °C and the mixing was carried out for 15 minutes.

The atomization pressure was 1 MPa.

(3) Placing the precursor in a rotary kiln for calcination under a nitrogen atmosphere, and then successivelysubjecting to mechanical crushing, sieving, and magnetic separation to obtain the lithium iron phosphate cathode material. The calcination conditions included raising the temperature to 700 °C at a rate of 2 °C/min and maintaining at this temperature for 8 hours.

Based on the products and preparation methods of the present disclosure, as well as the product performance in Tables 1-3 above, it can be seen that in Method Example 2, since the mixing method of the anhydrous iron phosphate with lithium acetate, titanyl sulfate, first carbon source, second carbon source, and third carbon source is the dry mixing method, the agglomeration degree of the prepared product therefrom is significantly higher than that of other Method Examples, thereby resulting in lower compacted density and peel strength, larger standard deviation of areal density sample and larger standard deviation of electrode sheet resistance sample, and poorer rate capability and cycling stability. However, in Method Example 3, reaction parameters are varied within the scope of the present disclosure, and satisfactory results are still achieved. As compared with Method Example 1, since no first carbon source was added, Method Example 4 shows a lower $\frac{FSSS}{{D}_{BET}}$, lower standard deviation of areal density sample and lower standard deviation of electrode sheet resistance sample, and a slightly reduced specific capacity of the material, which however are significantly better than those in Comparative Examples 1-4. It is fully proven that better results can be achieved even if only two of the carbon sources were present in the present disclosure. In Method Example 5, the type and use amount of the carbon source, as well as the reaction conditions are adjusted, and favorable performance was still obtained. In Method Example 6, all raw materials are directly ball milled and mixed, which results in a significant increase in FSSS and $\frac{FSSS}{{D}_{BET}}$ of the product prepared therefrom, leading to an increase in agglomeration degree. In Method Example 7, a chemical composition similar to that of Method Example 6 is prepared using the method of Method Example 5. However, since ρ_{%} and the agglomeration degree of Method Example 7 are better than those of Method Example 6, its comprehensive performance iss superior.

In Method Comparative Examples 1 and 2, the lithium iron phosphate powder is prepared according to conventional methods, which is then mixed with a carbon source and calcined. Whether a single-stage calcination or a three-stage calcination is used, the comprehensive performance of the prepared lithium iron phosphate cathode material is significantly inferior to that of the above Method Examples. Compared with Method Example 1, a single-stage calcination is performed in the step (3) of Method Comparative Example 3, and its performance is significantly inferior to that of Method Example 1. The performance of Method Comparative Example 4 is even inferior to that of Method Comparative Example 3, due to the use of only one carbon source. In this case, the FSSS and $\frac{FSSS}{{D}_{BET}}$ of the prepared lithium iron phosphate cathode material are significantly improved, and both the ρ% and the agglomeration degree exceed the scope of the present disclosure, leading to a significant deterioration in electrochemical performance.

In addition, the present disclosure further provided Method Examples 8-14 and Method Comparative Example 5. Compared with Method Example 1, a certain parameter or step of Method Examples 8-14 and Method Comparative Example 5 were changed.

Specifically, the specific steps of Method Examples 8-14 and Method Comparative Example 5 were as follows.

### Method Example 8

The differences from Method Example 1 were that the carbon source and the raw material mixture were subjected to dry mix in a ball milling device, which included the following steps:
mixing the anhydrous iron phosphate with a Dv50 of 8.52 µm, lithium carbonate, the first carbon source, the second carbon source, and the third carbon source to obtain the raw material mixture; and placing the raw material mixture in a ball milling device for grinding and crushing to obtain a precursor, wherein a Dv50 of the precursor was controlled to 0.4-0.5 µm.

The anhydrous iron phosphate and the lithium carbonate were mixed according to n(Fe):n(Li)=1:1.05.

The first carbon source was polyimide; the second carbon source was glucose; and the third carbon source was ethylene glycol.

A ratio of the total mass of anhydrous iron phosphate and lithium carbonate, to the first carbon source, to the second carbon source, and to the third carbon source was 10g:0.5g:0.5g:0.5g.

Conditions for grinding and crushing in a ball milling device: a frequency of 30 Hz; zirconia beads with a diameter of 1 mm; a bead-to-charge volume ratio of 1:1; a rotate speed of 600 rpm; a ball milling time of 3 hours; and room temperature.

The precursor was calcined, and a calcination method was the same as that in the step (3) of Method Example 1.

### Method Example 9

The differences from Method Example 1 were that the carbon source and the raw material mixture were mixed in a jet mill, which included the following steps.
(1) The same as Method Example 1; and
(2) Preparing a mixed solution of carbon sources, wherein mass percentages of polyimide, glucose, ethylene glycol, and solvent DMF in the mixed solution of carbon sources were 10%:10%:10%:70%, respectively; and mixing the anhydrous iron phosphate obtained in the step (1) with lithium carbonate to obtain the raw material mixture, then introducing the mixed solution of carbon sources after atomization into the jet mill using air as a medium to mill and coat the raw material mixture, to obtain the precursor.

The anhydrous iron phosphate and the lithium carbonate were mixed according to n(Fe):n(Li)=1:1.05.

A ratio of the raw material mixture to the mixed solution of carbon sources was 10 g:5 g.

An airflow had a pressure of 1±0.1 MPa. When the raw material mixture were mixed with the mixed solution of carbon sources, the airflow had a temperature of 120 °C and the mixing was carried out for 20 minutes.

The atomization pressure was 1 MPa.

(3) The same as Method Example 1.

### Method Example 10

The difference from Method Example 1 was that the third carbon source solution after atomization, the second carbon source solution after atomization, and the first carbon source solution after atomization were successively introduced into the jet mill to mill and coat the raw material mixture, to obtain a first precursor, a second precursor, and a third precursor, respectively.

### Method Example 11

The difference from Method Example 1 was that in the step (2), a ratio of the raw material mixture, the first carbon source solution, the second carbon source solution, and the third carbon source solution was 10g:8g:2.5g:2g.

### Method Example 12

The difference from Method Example 1 was that in the step (2), a d ratio of the raw material mixture, the first carbon source solution, the second carbon source solution, and the third carbon source solution was 10g:2g:2.5g:8g.

### Method Example 13

The difference from Method Example 1 was that in the step (2), the raw material mixture and the carbon source solutions were mixed at room temperature of 25 °C.

### Method Example 14

The differences from Method Example 1 were that a ball milling device was used instead of the jet mill for wet mixing, and the specific steps were as follows.
(1) The same as Method Example 1.
(2) The anhydrous iron phosphate obtained in the step (1) was mixed with lithium carbonate to obtain the raw material mixture, then a first carbon source solution, a second carbon source solution, and a third carbon source solution were prepared; the first carbon source solution after atomization was sprayed onto the raw material mixture under stirring, stirred evenly, and then placed in a ball milling device for a first ball milling to obtain a first precursor; the second carbon source solution after atomization was sprayed onto the first precursor under stirring, stirred evenly, and placed in the ball milling device for a second ball milling to obtain a second precursor; and the third carbon source solution after atomization was sprayed onto the second precursor under stirring, stirred evenly, and placed in the ball milling device for a third ball milling to obtain a third precursor.

The anhydrous iron phosphate and the lithium carbonate were mixed according to n(Fe):n(Li)=1:1.05. An atomization pressure was 1 MPa.

The first carbon source solution was a 10 wt% solution of polyimide in DMF; the second carbon source solution was a glucose aqueous solution with a concentration of 20 wt%; and the third carbon source solution was a 10 wt% solution of ethylene glycol in ethanol .

A ratio of the raw material mixture, the first carbon source solution, the second carbon source solution, and the third carbon source solution was 10g:5g:2.5g:5g.

Conditions for grinding and crushing in a ball milling device: a frequency of 30 Hz; zirconia beads with a diameter of 1 mm; a bead-to-charge volume ratio of 1:1; a rotate speed of 600 rpm; first ball milling at a temperature of 120 °C for 1 hour; second ball milling at a temperature of 100 °C for 1 hour; and third ball milling at a temperature of 80 °Cfor 1 hour.

### (3) The same as Method Example 1.

### Method Comparative Example 5

The difference from Method Example 1 was that in the step (2), only a second carbon source solution was added.

The products obtained in the above Method Examples 8-14 and Method Comparative Example 5 were tested, and the test results were shown in Table 4.

**Table 4. Statistical Table of Parameter Detection for Different Samples**

| Samples | *ρ_{LFP}*, g/cm³ | FSSS, µm | BET, m²/g | $\frac{FSSS}{{D}_{BET}}$ | ρ_{%}, % | Agglomeration degree N |
|---|---|---|---|---|---|---|
| Method Example 1 | 3.58 | 1.58 | 12.9 | 12.16 | 61 | 1097 |
| Method Example 8 | 3.59 | 4.85 | 11.22 | 32.56 | 78 | 26923 |
| Method Example 9 | 3.59 | 2.58 | 12.72 | 19.64 | 62 | 4694 |
| Method Example 10 | 3.58 | 2.65 | 12.82 | 20.27 | 52 | 4331 |
| Method Example 11 | 3.55 | 1.84 | 12.72 | 13.85 | 71 | 1885 |
| Method Example 12 | 3.59 | 1.52 | 13.24 | 12.04 | 58 | 1013 |
| Method Example 13 | 3.6 | 3.2 | 12.22 | 23.46 | 84 | 10849 |
| Method Example 14 | 3.58 | 1.52 | 13.25 | 12.02 | 54 | 937 |
| Method Comparative Example 5 | 3.57 | 5.71 | 11.65 | 39.58 | 58 | 35964 |

From the above table, it can be seen that in Method Example 8, the anhydrous iron phosphate, lithium carbonate, the first carbon source, the second carbon source, and the third carbon source are mixed and ball milled to obtain a precursor. In this case, the FSSS and $\frac{FSSS}{{D}_{BET}}$ were significantly increased, resulting in an increase in agglomeration degree which exceeds the scope of the present disclosure. In Method Example 9, all carbon sources are mixed together without being added sequentially, which results in a slight increase in FSSS, but $\frac{FSSS}{{D}_{BET}}$, ρ% and aggregation degree N remains within the range specified in the present disclosure. The carbon sources in Method Example 10 are added in a reverse order relative to Method Example 1, resulting in a slight increase in FSSS, but $\frac{FSSS}{{D}_{BET}}$, ρ% and aggregation degree N remains within the range specified in the present disclosure. In Method Example 11-12, the amount of each of the first carbon source, the second carbon source and the third carbon source added is adjusted. It can be seen that changes in the addition amount of the first carbon source and the third carbon source also exert a certain influence on the performance parameters of the product. Specifically, when the amount of the first carbon source increases and the amount of the third carbon source decreases, FSSS becomes larger, BET decreases, and $\frac{FSSS}{{D}_{BET}}$, ρ% and agglomeration degree N all increase. When the amount of the first carbon source decreases and the amount of the third carbon source increases, FSSS decreases, BET increases, and $\frac{FSSS}{{D}_{BET}}$, *ρ*_{%} and agglomeration degree N all decrease. Therefore, the above parameters can be controlled within a reasonable range by adjusting the addition amount of carbon sources. In Method Example 13, the mixing temperature of the raw material mixture and the carbon source solutions is changed, resulting in a significant increase in the resulting *ρ*_{%}. In Method Example 14, a ball milling device is used instead of the jet mill for wet mixing. It can be seen that both the jet milling and ball milling are capable of preparing a lithium iron phosphate cathode material that simultaneously satisfies the requirements that $\frac{FSSS}{{D}_{BET}}$ and *ρ*_{%} fall within their respective specified ranges. However, using the jet mill for mixing enables better dispersion of the components in the precursor, allowing the carbon sources to be evenly dispersed on the surface of the anhydrous iron phosphate or lithium source particles, thereby facilitating subsequent uniform vaporization and pore formation, and yielding a lithium iron phosphate cathode material with uniform carbon distribution. Through the above Method Examples, it can be seen that when the parameters were adjusted within the parameter range of the present disclosure, a lithium iron phosphate cathode material that simultaneously satisfies the requirements that $\frac{FSSS}{{D}_{BET}}$ and *ρ*_{%} fall within their respective specified ranges can be obtained. The lithium iron phosphate cathode material exhibits good dispersibility, low agglomeration degree, and high compacted density, and a cathode sheet prepared therefrom demonstrates uniform areal density and high peel strength, so that a battery prepared from the cathode sheet has high specific capacity and superior cycling stability.

However, in Method Comparative Example 5, only a second carbon source is added, which causes FSSS to exceed the range specified in the present disclosure and lead to a significant increase in $\frac{FSSS}{{D}_{BET}}$, ultimately leading to an agglomeration degree exceeding the range specified in the present disclosure. It is fully demonstrated that the use of only one carbon source is insufficient to obtain a lithium iron phosphate cathode material with an agglomeration degree below 25000.

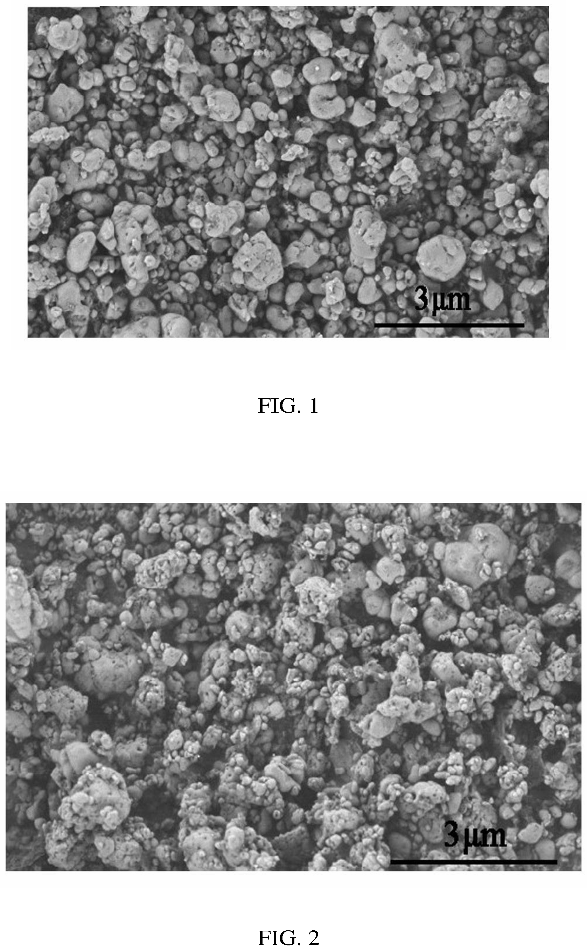

In the present disclosure, scanning electron microscopy was also conducted on the products of the above Examples 1, 8, and Comparative Example 4, and the SEM images were shown in FIG. 1, FIG.2 and FIG.3 respectively.

From the comparison of FIG. 1, FIG.2 and FIG.3, it can be seen that the dispersibility follows the order: Example 1>Example 8>Comparative Example 4.

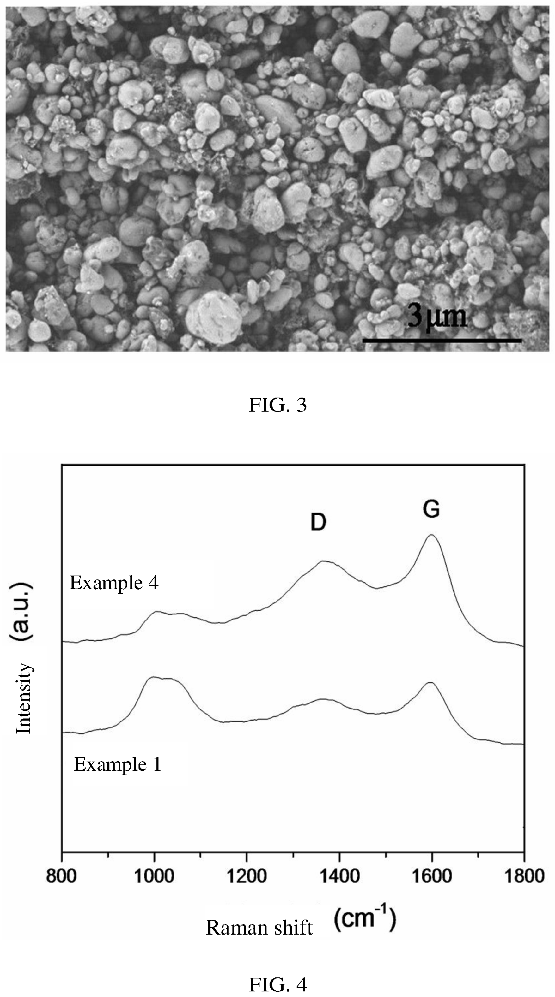

Further, the lithium iron phosphate cathode materials provided in Examples 1 and 4 were subjected to Raman spectroscopy tests. A graphitization degree of the lithium iron phosphate cathode material was characterized using a Burker RFS100/S Raman spectrometer (Germany) with an excitation wavelength of 458 nm. After baseline subtraction, a Gauss function was used for fitting, a D-band at 1300-1400 cm⁻¹ represented the A_{1g} vibration mode of sp³-hybridized carbon atoms, and reflected the defects or disordered structure of the carbon, with a corresponding peak intensity denote as I_{D}; a G-band at 1500-1600 cm⁻¹ represented the E_{2g} vibration mode of sp²-hybridized carbon atoms, and reflected the ordered structure of the carbon, with a corresponding peak intensity denoted as I_{G}. $\frac{{I}_{G}}{{I}_{D}}$ was used to evaluate the graphitization degree of the carbon material in the lithium iron phosphate cathode material. The test results are shown in FIG. 4.

The higher the graphitization degree, the better the conductivity of the carbon material. The Raman spectra of Examples 1 and 4 are shown in FIG. 4, with I_{G}/I_{D}=1.22 for Example 1 and I_{G}/I_{D}=1.09 for Example 4, indicating that the addition of the first carbon source is beneficial for improving the graphitization degree of the lithium iron phosphate cathode material. Moreover, the addition amount of carbon sources in Method Example 4 is greater than that in Method Example 1, but the content of carbon material in Example 1 is higher, indicating that the addition of the first carbon source is conducive to increasing the solid residual amount of the carbon sources, thereby increasing the conductive carbon.

The above examples are only the preferred examples of the present disclosure, and are not intended to limit the present disclosure. For those skilled in the art, various modifications and changes may be made to the present disclosure. Any modifications, equivalent substitutions, and improvements, etc., made within the spirit and principles of the present disclosure should be included within the scope of protection of the present disclosure.

### Industrial Applicability

The present disclosure provides a lithium iron phosphate cathode material that simultaneously satisfies $\frac{FSSS}{{D}_{BET}} = 5 - 40$ and ρ%=50%-90%. The lithium iron phosphate cathode material exhibits good dispersibility, low agglomeration degree, and high compacted density. A cathode sheet prepared with the lithium iron phosphate cathode material as the cathode active material demonstrates uniform areal density and high peel strength, so that a battery prepared from the cathode sheet has high specific capacity and superior cycling stability. The preparation method is simple and easy to implement, offering favorable industrial applicability.

## Claims

1. A lithium iron phosphate cathode material, comprising primary particles and secondary particles formed by agglomeration of the primary particles, wherein the lithium iron phosphate cathode material satisfies $\frac{FSSS}{{D}_{BET}} = 5 - 40$ and ρ%=50%-90%, where FSSS refers to a Fisher sub-sieve size of the lithium iron phosphate cathode material, in a unit of µm, D_{BET} refers to a specific surface area particle size of the lithium iron phosphate cathode material, in a unit of µm; and the ρ%=1-H%, where ρ% refers to a relative density of the secondary particles, and H% refers to a porosity of the secondary particles.

2. The lithium iron phosphate cathode material according to claim 1, wherein D_{BET} denotes a particle size of the lithium iron phosphate cathode material, as determined and calculated based on measurements from a nitrogen adsorption-desorption method, and ${D}_{BET} = \frac{6}{BET \times {ρ}_{LFP}}$, where BET refers to a specific surface area of the lithium iron phosphate cathode material, and has a value ≤20 m²/g, and *ρ_{LFP}* refers to a true density of the lithium iron phosphate cathode material, and has a value in a range of 3.3-3.6 g/cm³; and/or,
FSSS denotes an average particle size of the lithium iron phosphate cathode material as measured by a constant-flow air permeability method, and has a value in a range of 0.4-5 µm; and/or,
an agglomeration degree N of the lithium iron phosphate cathode material is less than 25000, and the agglomeration degree satisfies $N = {\left(\frac{FSSS}{{D}_{BET}}\right)}^{3} \times ρ %$; and/or,
a compacted density of the lithium iron phosphate cathode material is 1.9-3.0 g/cm³.

3. The lithium iron phosphate cathode material according to claim 2, wherein the lithium iron phosphate cathode material satisfies $\frac{FSSS}{{D}_{BET}} = 10 - 30$; and/or,
the secondary particles of the lithium iron phosphate cathode material satisfy ρ%=50%-70%; and/or,
the lithium iron phosphate cathode material has an agglomeration degree N of 200-12000; and/or,
the lithium iron phosphate cathode material satisfies FSSS=1-2.5 µm; and/or,
the lithium iron phosphate cathode material satisfies BET=9-15 m²/g.

4. The lithium iron phosphate cathode material according to any one of claims 1 to 3, wherein the lithium iron phosphate cathode material comprises an active material matrix and a carbon material; a general formula of the active material matrix is Li₁₋ₓAₓFe_{1-y}M_{y}(PO_{4-z})D_{z}, where A is one or more selected from the group consisting of Na and Mg; M is one or more selected from the group consisting of Al, Ni, Co, Mn, Ti, La, Ce, Cr, Mo, Ca, Ga, V, Nb, Zr, In, Zn and Y; D is one or more selected from the group consisting of F, S, N, and Cl; 0≤x≤0.1; 0≤y≤0.1 and 0≤z≤0.1; and a mass of the carbon material is 1% to 5% of a mass of the lithium iron phosphate cathode material.

5. A preparation method of the lithium iron phosphate cathode material according to any one of claims 1 to 4, comprising:
mixing iron phosphate and a lithium salt to obtain a raw material mixture, mixing the raw material mixture with carbon sources having different vaporization temperatures to obtain a precursor; and
subjecting the precursor to a staged calcination in an inert atmosphere, followed by crushing, sieving, and magnetic separation to obtain the lithium iron phosphate cathode material.

6. The preparation method of the lithium iron phosphate cathode material according to claim 5, wherein mixing the iron phosphate and the lithium salt comprises at least one of features I to IV;
Feature I: before mixing the iron phosphate and the lithium salt, the iron phosphate is first added to a jet mill for milling;
Feature II: the lithium salt is at least one of lithium carbonate, lithium oxalate, and lithium acetate;
Feature III: when mixing the iron phosphate and the lithium salt, a dopant is further added, which is at least one of a salt, an oxide, and a hydroxide of a doping element; and
Feature IV: the iron phosphate and the dopant are added according to a stoichiometric ratio.

7. The preparation method of the lithium iron phosphate cathode material according to claim 5 or 6, wherein the carbon sources having different vaporization temperatures comprise a first carbon source having a vaporization temperature of 400-600 °C, a second carbon source having a vaporization temperature of 200-400 °C, and a third carbon source having a vaporization temperature of 100-200 °C;
the first carbon source comprises at least one of polyimide, polyphenylene ether, and polyetherimide;
the second carbon source comprises at least one of glucose, polyethylene glycol, starch, sucrose, maltose, cellulose, chitosan, polyacrylonitrile, benzyl alcohol, and glycerol; and
the third carbon source comprises at least one of phenol, ethylene glycol, propylene glycol, butylene glycol, isopropanol, sorbitol, erythritol, fructose, malic acid, citric acid, and salicylic acid.

8. The preparation method of the lithium iron phosphate cathode material according to claim 7, wherein mixing the raw material mixture with the carbon sources having different vaporization temperatures comprises at least one of features V to IX;
Feature V: the raw material mixture is mixed with the carbon sources having different vaporization temperatures in a jet mill, and an airflow is introduced during mixing, wherein the airflow has a pressure of 0.5-1.5 MPa and a temperature of 25-120°C; and the mixing is performed for a total mixing time of 15-60 minutes;
Feature VI: the carbon sources having different vaporization temperatures are first prepared into a carbon source solution with a mass percentage concentration of 10% to 30% before being mixed with the raw material mixture, subsequently the carbon source solution is atomized and then mixed with the raw material mixture, wherein an atomization pressure is 0.1-1.5 MPa;
Feature VII: the raw material mixture is first mixed with the first carbon source, then mixed with the second carbon source, and finally mixed with the third carbon source;
Feature VIII: a total mass of the carbon sources having different vaporization temperatures is 15% to 25% of a mass of the raw material mixture; and
Feature IX: when the raw material mixture is mixed with the carbon sources having different vaporization temperatures, a mass ratio of the first carbon source, the second carbon source, and the third carbon source is 0-15:2.5-15:2.5-10.

9. The preparation method of the lithium iron phosphate cathode material according to any one of claims 5 to 8, wherein the staged calcinations comprise a first stage, a second stage, and a third stage, in the first stage, the temperature is raised at a rate of 1 to 2 °C/min to 180-220 °C and maintained at this temperature for 1 to 2 hours, in the second stage, the temperature is raised at a rate of 2 to 3 °C/min to 380-420 °C and maintained at this temperature for 2 to 4 hours, and in the third stage, the temperature is raised at a rate of 4 to 6 °C/min to 650-750 °C and maintained at this temperature for 4 to 8 hours.

10. A lithium-ion battery, comprising the lithium iron phosphate cathode material according to any one of claims 1 to 4 or the lithium iron phosphate cathode material prepared by the preparation method according to any one of claims 5 to 9.
